# EUROPEAN PATENT APPLICATION

(11) **EP 2 824 968 A1**
(43) Date of publication of application: **14.01.2015**
(21) Application number: 14156120.9
(22) Date of filing: 21.02.2014
(51) Int. Cl.: H04W 48/12, H04W 84/12

(54) **Wireless communication apparatus, connection control method, and recording medium**

(30) Priority: 10.07.2013 JP 2013144554
(71) Applicant: Kabushiki Kaisha Toshiba, Tokyo 105-8001 (JP)
(72) Inventor: Namba, Yoshiki, Tokyo, 105-8001 (JP); Watanabe, Hiroyuki, Tokyo, 105-8001 (JP); Iida, Yasutaka, Tokyo, 105-8001 (JP)
(74) Representative: Hoffmann Eitle

(57) **Abstract**

According to one embodiment, a wireless communication apparatus (10) includes a wireless unit (12) and a MAC processor (14). The wireless unit (12) transmits a beacon via a wireless communication. The MAC processor (14) controls a period at which the beacon is transmitted. The MAC processor (14) includes a determination unit (141) and a controller (145). The determination unit (141) determines that a process of connection to a terminal starts upon receiving a response signal to the beacon to output a start signal upon receiving a response signal to the beacon. The controller (145) transmits the beacon at a first period before the start signal is output and switches the period of transmission of the beacon from the first period to a second period when the start signal is output. The second period is longer than the first period.

## Description

### FIELD

Embodiments described herein relate generally to a wireless communication apparatus, a connection control method, and a connection control program.

### BACKGROUND

Public wireless Local Area Networks (LANs) open to the public are increasingly prevalent in public areas such as stations and airports and commercial facilities such as restaurants. With the increasing availability of public wireless LANs to the public, services are spreading which are intended to improve users' convenience by distributing operational information on electric trains, airplanes, and the like and various types of information such as advertisements utilizing wireless LAN systems. For such services, it is effective to distribute such information to places where service users can utilize the information. To achieve this, the information needs to be distributed to limited narrow areas such as areas in front of stores. Examples of the information distributed in this case include a low amount of information such as texts or still images and a large amount of information such as high-quality videos and high-quality images intended to attract people receiving the information.

When a common wireless LAN (IEEE802.1) is used, several seconds are needed to start data transfer between a communication terminal and an access point. The time period needed to start data transfer further increases if a plurality of communication terminals are present in an area in which information is distributed. Thus, the access point may not be completed to distribute all amount of information to an service user before the information user passes through the area. Furthermore, while a first service user is receiving distributed information, when a second service user enters the area, the access point attempts to also start communication with the second information user. This increases the time period needed to distribute the information to the first service user.

### BRIEF DESCRIPTION OF THE DRAWINGS

FIG. 1 a block diagram showing a functional configuration of a wireless LAN system including an access point serving as a wireless communication apparatus according to a first embodiment;
FIG. 2 is a block diagram showing a functional configuration of the AP shown in FIG. 1;
FIG. 3 is a block diagram showing a functional configuration of a MAC processor shown in FIG. 2;
FIG. 4 is a sequence diagram showing how the AP shown in FIG. 2 switches a period at which beacons are transmitted;
FIG. 5 is a flowchart showing an operation performed by the MAC processor when the AP shown in FIG. 2 switches the period at which beacons are transmitted;
FIG. 6 is a diagram showing another configuration of the AP shown in FIG. 2;
FIG. 7 is a diagram showing another configuration of the AP shown in FIG. 2;
FIG. 8 is a diagram showing another configuration of the AP shown in FIG. 2;
FIG. 9 is a sequence diagram showing how the AP shown in FIG. 2 suspends the transmission of beacons;
FIG. 10 is a block diagram showing a functional configuration of an AP according to a second embodiment;
FIG. 11 is a sequence diagram showing how the AP shown in FIG. 10 switches a period at which beacons are transmitted;
FIG. 12 is a flowchart showing an operation performed by a MAC processor when the AP shown in FIG. 10 switches the period at which beacons are transmitted;
FIG. 13 is a diagram showing another configuration of the AP shown in FIG. 10; and
FIG. 14 is a diagram showing another configuration of the AP shown in FIG. 10.

### DETAILED DESCRIPTION

In general, according to one embodiment, a wireless communication apparatus includes a wireless unit and a Media Access Control (MAC) processor. The wireless unit transmits a beacon via a wireless communication. The MAC processor controls a period at which the beacon is transmitted. The MAC processor includes a determination unit and a controller. The determination unit determines that a process of connection to a terminal starts upon receiving a response signal to the beacon to output a start signal. The controller transmits the beacon at a first period before the start signal is output and switches the period of transmission of the beacon from the first period to a second period when the start signal is output. The second period is longer than the first period.

### [First Embodiment]

A first embodiment will be described below with reference to the drawings.

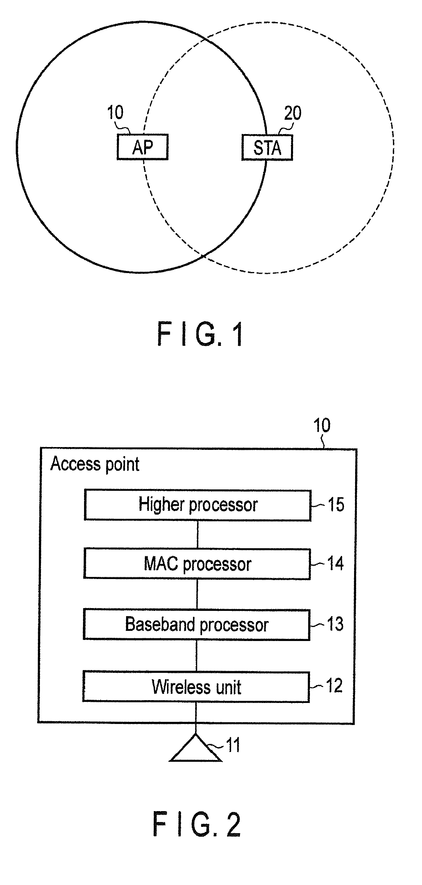

FIG. 1 is a block diagram showing a functional configuration of a wireless LAN system including an access point (AP) 10 serving as a wireless communication apparatus according to the first embodiment. The wireless LAN communication system shown in FIG. 1 comprises, for example, the AP 10 complying with IEEE 802.11 standards and a station (STA) 20 serving as a wireless communication terminal complying with IEEE 802.11 standards. The AP 10 and the STA 20 carry out wireless communications in compliance with IEEE 802.11 standards.

FIG. 2 is a block diagram showing a functional configuration of the AP 10 shown in FIG. 1. The AP 10 shown in FIG. 2 comprises an antenna unit 11, a wireless unit 12, a baseband processor 13, a MAC processor 14, and a higher processor 15.

The antenna unit 11 receives wireless signals transmitted by the STA 20 and the like. Furthermore, the antenna unit 11 transmits signals provided by the wireless unit 12 as wireless signals.

The wireless unit 12 carries out power adjustment and frequency conversion on a wireless signal received by the antenna unit 11 to generate a baseband signal. The wireless unit 12 outputs the baseband signal to the baseband processor 13.

Furthermore, the wireless unit 12 carries out power amplification and frequency conversion on a baseband signal provided by the baseband processor 13 and outputs the processed signal to the antenna unit 11.

The baseband processor 13 comprises, for example, a Field Programmable Gate Array (FPGA) and carries out processing specified in a physical layer. The baseband processor 13 demodulates the baseband signal provided by the wireless unit 12 in accordance with a predetermined demodulation scheme. The baseband processor 13 then outputs the demodulated signal to the MAC processor 14 as a frame signal.

Furthermore, the baseband processor 13 modulates a frame signal provided by the MAC processor 14 in accordance with a predetermined modulation scheme. The baseband processor 13 then outputs the modulated signal to the wireless unit 12 as a baseband signal.

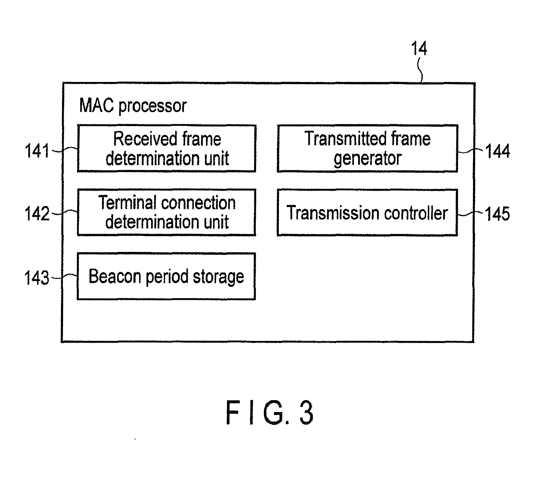

The MAC processor 14 includes, for example, a Central Processing Unit (CPU) and storage areas such as a Read Only Memory (ROM) and Random Access Memory (RAM) in which programs and data needed for the CPU to carry out processing are stored. The MAC processor 14 carries out processing specified in a MAC layer by allowing the CPU to carry out a connection control program. That is, the MAC processor 14 comprises a received frame determination unit 141, a terminal connection determination unit 142, a beacon period storage 143, a transmitted frame generator 144, and a transmission controller 145 as shown in FIG. 3.

The received frame determination unit 141 determines the frame type of a frame signal provided by the baseband processor 13. The received frame determination unit 141 outputs received frame information indicative of the type of the received frame resulting from the determination, to the terminal connection determination unit 142 and the transmission controller 145.

The terminal connection determination unit 142 references the received frame information provided by the received frame determination unit 141 to determine whether or not the received frame signal is a management frame Authentication. If the received frame signal is the management frame Authentication, the terminal connection determination unit 142 determines that a process of connection to the STA 20 starts. The terminal connection determination unit 142 outputs a start signal to the transmission controller 145.

The beacon period storage 143 pre-stores periods at which beacons, which are management frames, are transmitted. That is, the beacon period storage 143 stores a first beacon period and a second beacon period. The second beacon period is longer than the first beacon period.

The transmitted frame generator 144 generates a frame signal such as a management frame, a control frame, or a data frame in accordance with an instruction from the transmission controller 145. The transmitted frame generator 144 outputs the generated frame signal to the baseband processor 13.

The transmission controller 145 instructs the transmitted frame generator 144 to generate a beacon at the first or second beacon period. Switching from the first beacon period to the second beacon period is carried out based on the start signal provided by the terminal connection determination unit 142.

For example, when the AP 10 is not in communication with any STA 20, the transmission controller 145 reads the first beacon period from the beacon period storage 143 and allows the transmitted frame generator 144 to generate beacons at the first beacon period. Upon receiving the start signal from the terminal connection determination unit 142 in the case of that any other connection process is not started, the transmission controller 145 reads the second beacon period from the beacon period storage 143. The transmission controller 145 then allows the transmitted frame generator 144 to generate beacons at the second beacon period until distribution of data is completed.

Furthermore, the transmission controller 145 references the received frame information provided by the received frame determination unit 141 to determine a frame signal to be generated by the transmitted frame generator 144. The transmission controller 145 instructs the transmitted frame generator 144 to generate the determined frame signal.

For example, upon receiving a management frame Authentication from the STA 20, the transmission controller 145 allows the transmitted frame generator 144 to generate a management frame Authentication and a control frame Ack. Furthermore, upon receiving a management frame Association request, the transmission controller 145 allows the transmitted frame generator 144 to generate a management frame Association response and the control frame Ack. Additionally, the transmission controller 145 allows the transmitted frame generator 144 to generate a plurality of data frames for pre-stored data such as videos or images.

The higher processor 15 carries out processing for layers higher than the MAC layer.

Now, an operation performed by the AP 10 to switch the period at which beacons are transmitted will be described.

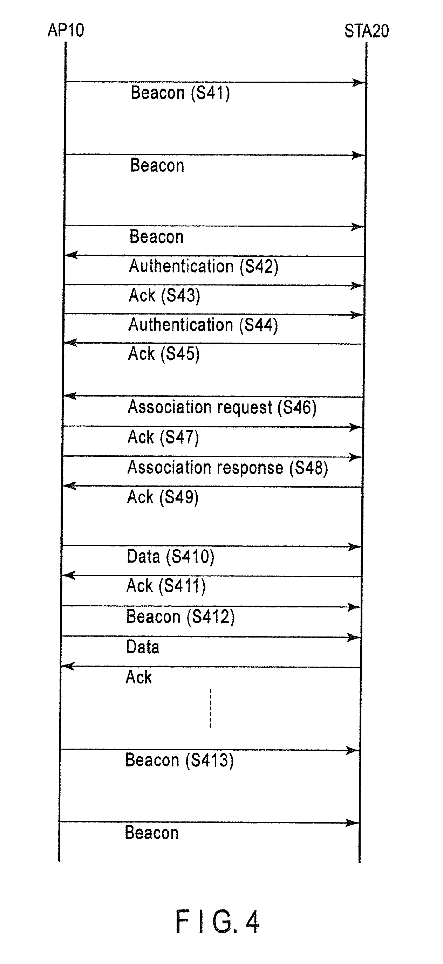

FIG. 4 shows a sequence diagram showing how the AP 10 switches the period at which beacons are transmitted.

First, the transmission controller 145 reads the first beacon period from the beacon period storage 143. The transmission controller 145 allows the transmitted frame generator 144 to generate beacons at the first beacon period. Thus, the beacons are transmitted from the AP 10 to the STA 20 at the first beacon period (sequence S41).

Upon receiving a beacon transmitted by the AP 10, the STA 20 transmits an Authentication, which is a management frame, to the AP 10 (sequence S42).

Upon receiving the Authentication transmitted by the STA 20, the transmission controller 145 allows the transmitted frame generator 144 to generate an Ack, which is a control frame. Thus, the AP 10 transmits the Ack (sequence S43). Subsequently, the transmission controller 145 allows the transmitted frame generator 144 to generate an Authentication, which is a management frame. The AP 10 then transmits the Authentication (sequence S44). Furthermore, upon receiving the Authentication transmitted by the STA 20, the transmission controller 145 switches the period for transmission of beacons from the first beacon period to the second beacon period. The transmission controller 145 then allows the transmitted frame generator 144 to generate beacons at the second beacon period. Thus, in sequence S412 shown in FIG. 4, the AP 10 transmits beacons at the second beacon period.

Upon receiving the Authentication transmitted by the AP 10, the STA 20 returns an Ack, which is a control frame (sequence S45), and transmits an Association request, which is a management frame, to the AP 10 (sequence S46).

Upon receiving the Association request, the MAC processor 14 of the AP 10 transmits an Ack, which is a control frame (sequence S47). The MAC processor 14 subsequently transmits an Association response, which is a management frame, to the STA 20 (sequence S48).

The STA 20 receives the Association response and Ack. Upon receiving the Association response, the STA 20 establishes a communication connection to the AP10. Upon establishing the communication connection to the AP 10, the STA 20 transmits an Ack, which is a control frame, to the STA 20 (sequence S49).

Upon receiving the Ack, the AP 10 transmits a Data, which is a data frame, to the STA20 (sequence S410). Upon receiving the Data, the STA 20 transmits an Ack to the AP 10 (sequence S411). Upon transmitting data frames corresponding to the amount of information to be distributed, the AP 10 terminates the communication connection. Upon transmitting data frames corresponding to the amount of information to be distributed, the transmission controller 145 reads the first beacon period from the beacon period storage 143. The transmission controller 145 allows the transmitted frame generator 144 to generate beacons at the first beacon period. Thus, the beacons are transmitted by the AP 10 at the first beacon period (sequence S413).

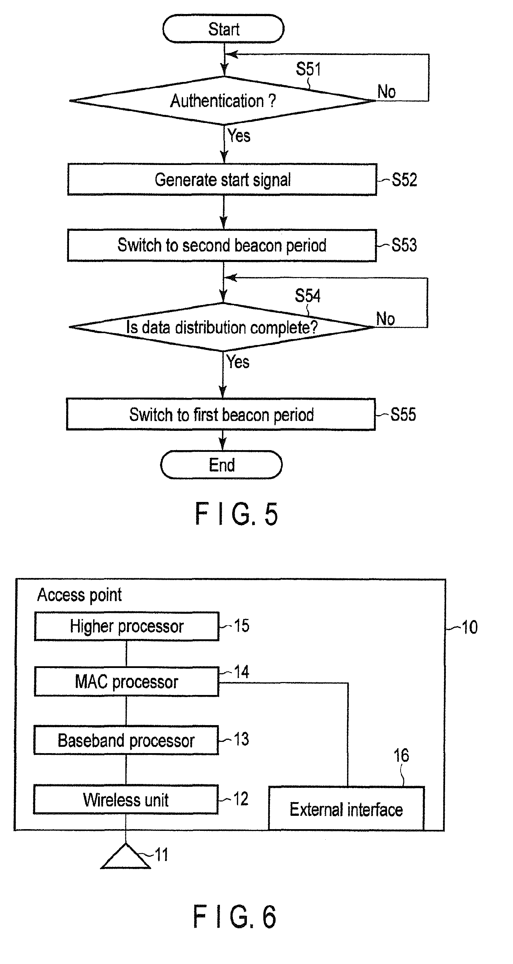

FIG. 5 is a flowchart showing an operation performed by the MAC processor 14 when the AP 10 switches the period at which beacons are transmitted.

First, the terminal connection determination unit 142 determines whether or not the received frame signal is an Authentication (step S51). If the received frame signal is an Authentication (Yes in step S51), the terminal connection determination unit 142 determines that a process of connection to the STA 20 has been started. The terminal connection determination unit 142 then outputs a start signal to the transmission controller 145 (step S52). If the received frame signal is not an Authentication (No in step S51), the MAC processor 14 repeats the processing in step S51 until the Authentication is received.

Upon receiving the start signal, the transmission controller 145 reads the second beacon period from the beacon period storage 143. The transmission controller 145 then allows the transmitted frame generator 144 to generate beacons at the second beacon period (step S53).

Subsequently, the transmission controller 145 determines whether or not the distribution of the data to the STA 20 is completed (step S54). If the distribution of the data to the STA 20 is completed (Yes in step S54), the transmission controller 145 reads the first beacon period from the beacon period storage 143. The transmission controller 145 allows the transmitted frame generator 144 to generate beacons at the first beacon period (step S55). If the distribution of the data to the STA 20 is not completed (No in step S54), the transmission controller 145 allows the transmitted frame generator 144 to generate beacons at the second beacon period until the distribution is completed.

As described above, according to the first embodiment, the MAC processor 14 of the AP 10 transmits beacons at the first beacon period before the process of connection to the STA 20 is started. After the process of connection to the STA 20 is started, the AP 10 transmits beacons at the second beacon period. After the process of connection to the STA 20 is started and before the connection is established, a process of connection to another STA 20 can be restrained from being started. In other words, during the process of connection to the STA 20, a process of connection to another STA is hindered from being carried out. Thus, the first embodiment can avoid an increase in a connection establishment time period. The connection establishment time period indicates a period from the start of the process of connection to the STA 20 until the establishment of the connection. Furthermore, while the AP 10 is transferring the data to the STA 20, a process of connection to another STA 20 can be restrained from being started. That is, the first embodiment can avoid an increase in a data transfer time period. The data transfer time period indicates a period needed to transfer the data to the STA 20.

Therefore, the wireless communication apparatus according to the first embodiment can suppress an increase in the connection establishment time period and the data transfer time period even if a plurality of communication terminals are present in the area in which the information is to be distributed.

Furthermore, when the data distribution, to the STA 20, is completed, the transmission controller 145 switches the period of transmission of beacons from the second beacon period to the first beacon period, according to the first embodiment. Thus, after the connection is terminated, beacons are transmitted at the first beacon period. The AP 10 can then retransmit beacons to an STA that can be a connection target without delay.

Furthermore, when the received frame signal is an Authentication, the terminal connection determination unit 142 determines that the process of connection to the STA 20 starts, according to the first embodiment. Then, in accordance with this determination, the transmission controller 145 switches the period of transmission of beacons from the first beacon period to the second beacon period. Authentication is the first response signal to a beacon from the AP 10, and thus, the transmission controller 145 can more effectively switch from the first beacon period to the second beacon period.

In the first embodiment, by way of example, a case described in which the first and second beacon periods are recorded in the beacon period storage 143 and in which the transmission controller 145 reads one of the beacon periods and generates beacons at the read beacon period. However, the first embodiment is not limited to this case. For example, as shown in FIG. 6, the AP 10 may comprise an external interface 16 to which a recording medium may be connected in which information used to update the beacon period information recorded in the beacon period storage 143 is connected. This enables the beacon period information recorded in the beacon period storage 143 to be updated as necessary.

Furthermore, in the first embodiment, a case described in which, by way of example, the first and second beacon periods are pre-recorded in the beacon period storage 143. However, the first embodiment is not limited to this case. For example, the transmission controller 145 may determine the second beacon period according to the amount of data in the information to be distributed. When the AP 10 is not in communication with the STA 20, the transmission controller 145 reads the first beacon period from the beacon period storage 143. The transmission controller 145 then allows beacons to be generated at the first beacon period. When a process of connection to the STA 20 is started, the transmission controller 145 calculates the time period needed to distribute the data based on the amount of the data to be distributed and a transmission speed pre-held as a parameter. Then, the transmission controller 145 determines the calculated time period to be the second beacon period for the case where the AP 10 is in communication with the STA 20. This enables a further reduction in the possibility that a process of connection to another terminal is carried out during communication with the STA 20.

Furthermore, the transmission controller 145 may determine the second beacon period based on the signal intensity of a response signal transmitted by the STA 20.

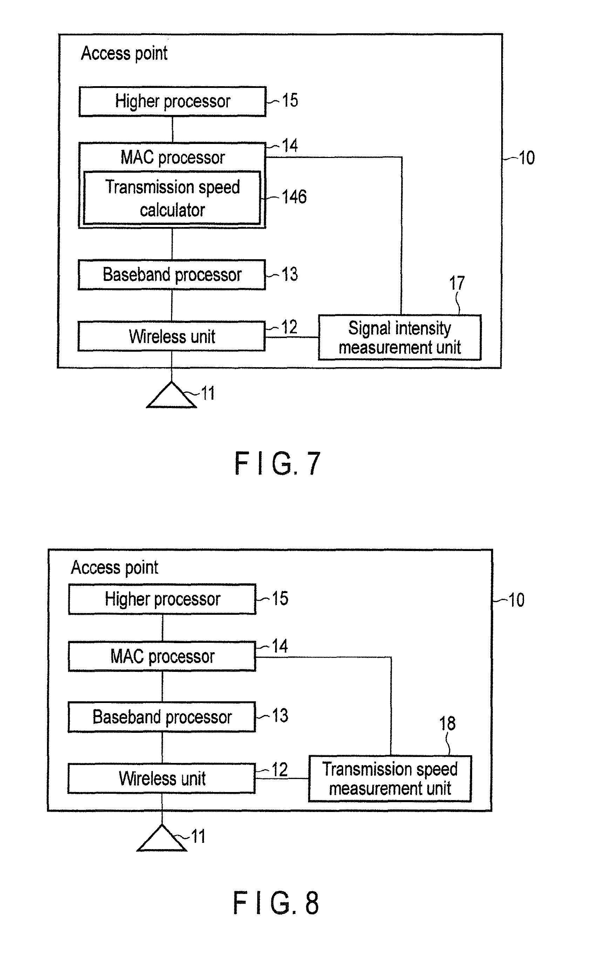

In this case, the AP 10 comprises a signal intensity measurement unit 17 as shown in FIG. 7. The signal intensity measurement unit 17 measures the signal intensity of a response signal (for example, Authentication) transmitted by the STA 20 in response to the beacon. The signal intensity measurement unit 17 then transmits the measured signal intensity information to the MAC processor 14.

The MAC processor 14 comprises a transmission speed calculator 146. Based on the signal intensity information measured by the signal intensity measurement unit 17, the transmission speed calculator 146 calculates a theoretical transmission speed at which a signal is transmitted to the terminal transmitting the response signal. The transmission speed calculator 146 roughly estimates the transmission speed by multiplying the calculated theoretical value by a preset coefficient of about 0.5. The transmission speed calculator 146 outputs the calculated transmission speed to the transmission controller 145. The transmission controller 145 calculates a time period needed to complete the distribution based on the amount of the data to be distributed and the calculated transmission speed. Then, the transmission controller 145 determines the calculated time period to be the second beacon period for the case where the AP 10 is in communication with the STA 20. This enables a further reduction in the possibility that a process of connection to another terminal is carried out during communication with the STA 20.

Furthermore, the AP 10 may measure the transmission speed and determine the second beacon period based on the measured transmission speed. In this case, the AP 10 comprises a transmission speed measurement unit 18 as shown in FIG. 8. The transmission speed measurement unit 18 measures the average transmission speed of signals in space and outputs the measured average transmission speed to the MAC processor 14. The transmission controller 145 of the MAC processor 14 calculates the time period needed to complete the distribution based on the amount of the data to be distributed and the transmission speed provided by the transmission speed measurement unit 18. The transmission controller 145 determines the calculated time period to be the second beacon period for the case where the AP 10 is in communication with the STA 20. This enables a further reduction in the possibility that a process of connection to another terminal is carried out during communication with the STA 20.

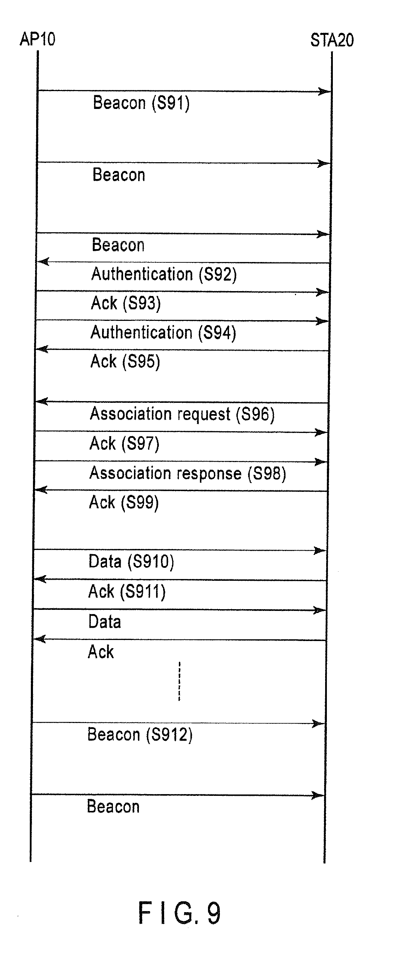

Furthermore, in the first embodiment, a case is described in which, by way of example, the AP 10, while in communication with the STA 20, transmits beacons at the second beacon period. However, the first embodiment is not limited to this case. While in communication with the STA 20, the AP 10 may stop the transmission of beacons as shown in FIG. 9.

Additionally, in the first embodiment, a case has been described in which, by way of example, the transmission controller 145 allows the transmitted frame generator 144 to generate beacons at the second beacon period until the distribution of the data to the STA 20 is completed. However, the first embodiment is not limited to this case. For example, the transmission controller 145 may allow beacons to be transmitted at the second beacon period exclusively during a preset duration.

### [Second Embodiment]

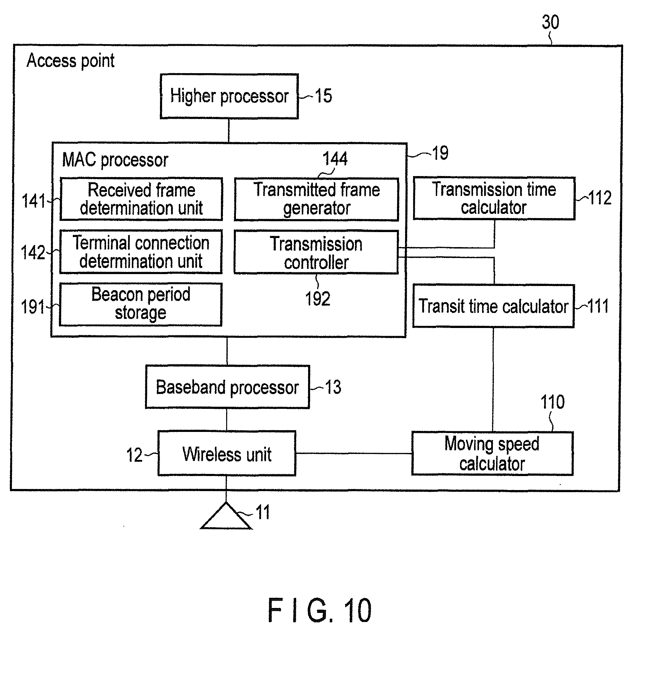

FIG. 10 is a block diagram showing a functional configuration of the AP 30 according to a second embodiment. An AP 30 shown in FIG. 10 comprises an antenna unit 11, a wireless unit 12, a baseband processor 13, a MAC processor 19, a higher processor 15, a moving speed calculator 110, a transit time calculator 111, and a transmission time calculator 112.

The moving speed calculator 110 measures the signal intensity of a response signal (for example, Ack) generated during communication with the STA 20. In this case, the signal intensity of a data signal transmitted by the AP 30 varies depending on a distance from the AP 30. The STA 20 transmits, to the AP 30, a signal Ack of an intensity corresponding to the signal intensity of a data signal transmitted by the AP 30. The moving speed calculator 110 references a change in the measured signal intensity to determine the moving distance of the STA 20. The moving speed calculator 110 calculates the moving speed of the STA 20 based on the determined moving distance and a time period needed for the movement.

The transit time calculator 111 references the moving speed calculated by the moving speed calculator 110 to calculate a transit time period needed for the STA 20 to pass through an information distribution area formed by the AP 30 by distributing information. The transit time calculator 111 outputs the calculated transit time period to the MAC processor 19.

The transmission time calculator 112 calculates the remaining time period needed to complete the distribution of the data based on the amount of the data to be distributed and the transmission speed pre-held as a parameter. The transmission time calculator 112 outputs the calculated remaining time period to the MAC processor 19.

The MAC processor 19 includes, for example, a Central Processing Unit (CPU) and storage areas such as Read Only Memory (ROM) and Random Access Memory (RAM) in which programs and data needed for the CPU to carry out processing are stored. The MAC processor 19 carries out the processing specified in the MAC layer by allowing the CPU to carry out the connection control program. That is, the MAC processor 19 comprises a received frame determination unit 141, a terminal connection determination unit 142, a beacon period storage 191, a transmitted frame generator 144, and a transmission controller 192.

A first beacon period for a case where beacons, which are management frames, are transmitted is pre-recorded in the beacon period storage 191.

When the AP 10 is not in communication with any STA 20, the transmission controller 192 reads the first beacon period from the beacon period storage 191 and allows the transmitted frame generator 144 to generate beacons at the first beacon period. Upon receiving a start signal from the terminal connection determination unit 142 in the case of that any other connection process is not started, the transmission controller 192 allows the transmitted frame generator 144 to stop generating beacons.

The transmission controller 192 compares the transit time period calculated by the transit time calculator 111 with the remaining time period calculated by the transmission time calculator 112. If the transit time is longer than the remaining time, then after the remaining time period, the transmission controller 192 reads the first beacon period from the beacon period storage 191 and allows the transmitted frame generator 144 to generate beacons at the first beacon period. Furthermore, if the remaining time period is longer than the transit time period, then after the remaining time period, the transmission controller 192 reads the first beacon period from the beacon period storage 191 and allows the transmitted frame generator 144 to generate beacons at the first beacon period.

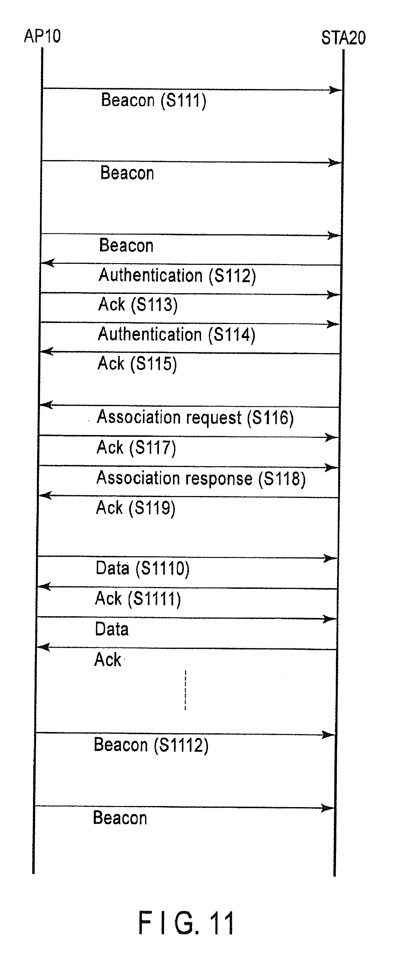

An operation performed by the AP 30 configured as described above to switch the period at which beacons are transmitted will be described. FIG. 11 is a sequence diagram showing how the AP 30 switches the period at which beacons are transmitted.

First, the transmission controller 192 reads the first beacon period from the beacon period storage 191. The transmission controller 192 allows the transmitted frame generator 144 to generate beacons at the first beacon period. Thus, the beacons are transmitted from the AP 30 to the STA 20 at the first beacon period (sequence S111).

Upon receiving a beacon transmitted by the AP 30, the STA 20 transmits an Authentication, which is a management frame, to the AP 30 (sequence S112).

Upon receiving the Authentication transmitted by the STA 20, the transmission controller 192 allows the transmitted frame generator 144 to generate an Ack, which is a control frame. Thus, the AP 30 transmits an Ack (sequence S113). Subsequently, the transmission controller 192 allows the transmitted frame generator 144 to generate an Authentication, which is a management frame. Thus, the AP 30 transmits an Authentication (sequence S114). Furthermore, upon receiving the Authentication transmitted by the STA 20, the transmission controller 192 stops the transmission of beacons.

Upon receiving the Authentication transmitted by the AP 30, the STA 20 returns an Ack, which is a control frame (sequence S115), and transmits an Association request, which is a management frame, to the AP 30 (sequence S116).

Upon receiving the Association request, the MAC processor 19 of the AP 30 transmits an Ack, which is a control frame (sequence S117), and subsequently transmits an Association response, which is a management frame, to the STA 20 (sequence S118).

The STA 20 receives the Association response and Ack. Upon receiving the Association response, the STA 20 establishes a communication connection to the AP 30. Upon establishing the communication connection to the AP 30, the STA 20 transmits an Ack, which is a control frame, to the AP 30 (sequence S119).

Upon receiving the Ack, the AP 30 transmits a Data, which is a data frame, to the STA 20 (sequence S1110). Upon receiving the Data, the STA 20 transmits an Ack to the AP 30 (sequence S1111). The transmission controller 192 reads the first beacon period from the beacon period storage 191 in response to the transit time period or the remaining time period. The transmission controller 192 allows the transmitted frame generator 144 to generate beacons at the first beacon period. Thus, the beacons are transmitted by the AP 30 at the first beacon period (sequence S1112).

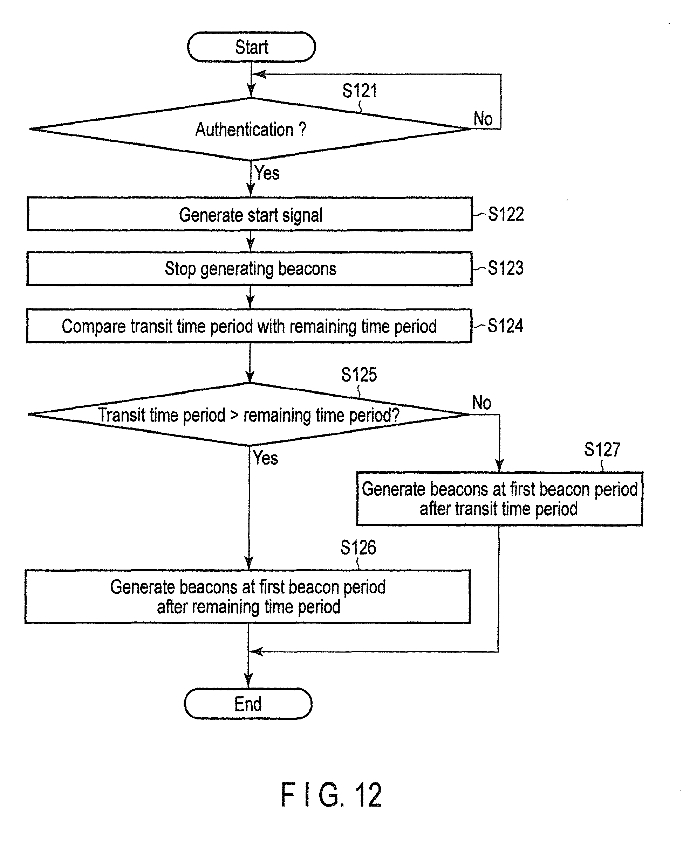

FIG. 12 is a flowchart showing an operation performed by the MAC processor 19 to switch the period at which beacons are transmitted.

First, the terminal connection determination unit 142 determines whether or not the received frame signal is an Authentication (step S121). If the received frame signal is an Authentication (Yes in step S121), the terminal connection determination unit 142 determines that a process of connection to the STA 20 starts and outputs a start signal to the transmission controller 192 (step S122). If the received frame signal is not an Authentication (No in step S121), the MAC processor 19 repeats the processing in step S121 until an Authentication is received.

Upon receiving the start signal, the transmission controller 192 allows the transmitted frame generator 144 to stop generating beacons (step S123).

When the connection to the STA 20 is established, the moving speed calculator 110 calculates the moving speed of the STA 20 with the established connection based on the signal intensity of a response signal (Ack) transmitted by the STA 20. The transit time calculator 111 references the moving speed calculated by the moving speed calculator 110 to calculate a transit time period needed for the STA 20 to pass through an information distribution area formed by the AP 30. The transmission time calculator 112 calculates the remaining time period needed to complete the distribution of the data based on the amount of the data to be distributed and the transmission speed pre-held as a parameter.

The transmission controller 192 compares the transit time period calculated by the transit time calculator 111 with the remaining time period calculated by the transmission time calculator 112 (step S124). The transmission controller 192 determines whether or not the transit time period is longer than the remaining time period (step S125). If the transit time period is longer than the remaining time period (Yes in step S125), then after the remaining time period, the transmission controller 192 reads the first beacon period from the beacon period storage 191 and allows the transmitted frame generator 144 to generate beacons at the first beacon period (step S126). If the transit time period is equal to or shorter than the remaining time period (No in step S125), then after the remaining time period, the transmission controller 192 reads the first beacon period from the beacon period storage 191 and allows the transmitted frame generator 144 to generate beacons at the first beacon period (step S127).

As described above, the MAC processor 19 of the AP 30 transmits beacons at the first beacon period before the process of connection to the STA 20 is started. Then, after starting the process of connection to the STA 20, the AP 30 stops transmitting beacons. Thus, after the process of connection to the STA 20 is started and before the connection is established, a process of connection to another STA 20 can be restrained from being started. In other words, during the process of connection to the STA 20, a process of connection to another STA is hindered from being carried out. Thus, the second embodiment can avoid an increase in a connection establishment time period. The connection establishment time period indicates a period needed to establish a connection to the STA 20. Furthermore, while the AP 30 is transferring data to the STA 20, a process of connection to another STA can be restrained from being started. Consequently, the second embodiment can avoid an increase in a data transfer time period. The time transfer time period indicates a period needed to transfer data to the STA 20.

Therefore, the wireless communication apparatus according to the second embodiment can suppress an increase in the connection establishment time period and the data transfer time period even if a plurality of communication terminals is present in the area in which the information is to be distributed.

Furthermore, according to the second embodiment, the transmission controller 192 compares the transit time period with the remaining time period, and if the transit time period is longer than the remaining time period, allows the transmitted frame generator 144 to generate beacons at the first beacon period after the remaining time period. Additionally, if the transit time period is equal to or shorter than the remaining time period, the transmission controller 192 allows the transmitted frame generator 144 to generate beacons at the first beacon period after the transit time period. Thus, the AP 30 can retransmit beacons to an STA that can be a connection target without delay.

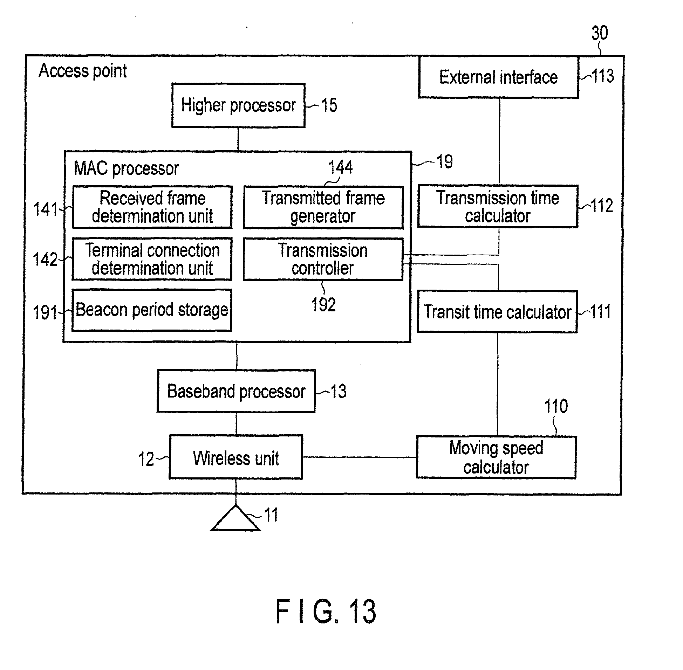

In the second embodiment, a case is described in which, by way of example, the data transmission speed is pre-recorded in the transmission time calculator 112. However, the second embodiment is not limited to this case. For example, as shown in FIG. 13, the AP 30 may comprise an external interface 113 to which a recording medium may be connected in which information used to update the transmission speed information recorded in the transmission time calculator 112 is connected. This enables the transmission speed information set in the transmission time calculator 112 to be updated as necessary.

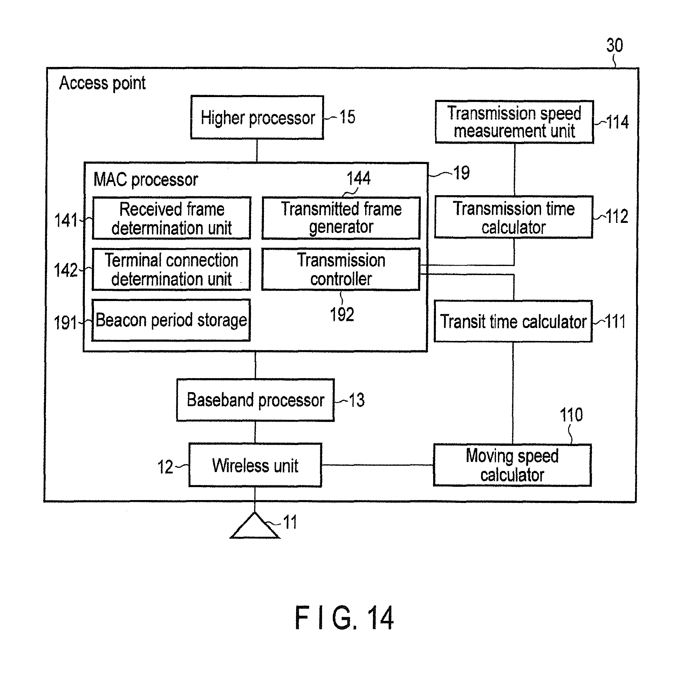

Furthermore, in the second embodiment, a case is described in which, by way of example, the transmission time calculator 112 calculates the remaining time period needed to complete the distribution of the data based on the amount of the data to be distributed and the pre-recorded transmission speed. However, the second embodiment is not limited to this case. For example, as shown in FIG. 14, the AP 30 may comprise a transmission speed measurement unit 114 that measures the average transmission speed of signals in space. The transmission speed measurement unit 114 measures the average transmission speed and outputs the measured average transmission speed to the transmission time calculator 112. The transmission time calculator 112 calculates the time period needed to complete the distribution based on the amount of the data to be distributed and the transmission speed provided by the transmission speed measurement unit 114. Thus, the transmission time calculator 112 can more accurately calculate the remaining time period.

While certain embodiments have been described, these embodiments have been presented by way of example only, and are not intended to limit the scope of the inventions. Indeed, the novel embodiments described herein may be embodied in a variety of other forms; furthermore various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A wireless communication apparatus (10) comprising:
a wireless unit (12) configured to transmit a beacon via a wireless communication; and
a Media Access Control (MAC) processor (14) configured to control a period at which the beacon is transmitted, the MAC processor comprising:
a determination unit (141) configured to determine that a process of connection to a terminal starts upon receiving a response signal to the beacon to output a start signal; and
a controller (145) configured to transmit the beacon at a first period before the start signal is output and to switch the period of transmission of the beacon from the first period to a second period when the start signal is output, the second period being longer than the first period.

2. The wireless communication apparatus (10) according to Claim 1, wherein the MAC processor (14) comprises a storage (143) configured to store information about the first period and the second period.

3. The wireless communication apparatus (10) according to Claim 2, further comprising an interface (16) to which a recording medium is connectible, the recording medium recording information used to update the first and second periods recorded in the storage.

4. The wireless communication apparatus (10) according to Claim 1, wherein the controller (145) is configured to distribute data to a terminal after the establishment of a communication connection and to transmit the beacon at the first period after the completion of the data distribution.

5. The wireless communication apparatus (10) according to Claim 1, wherein the controller (145) is configured to calculate the second period based on a data amount of data to be distributed to a terminal after a communication connection is established and on a transmission speed for the data.

6. The wireless communication apparatus (10) according to Claim 1, further comprising a signal intensity measurement unit (17) configured to measure a signal intensity of a response signal to the beacon,
wherein the MAC processor (14) comprises a transmission speed calculator (146) configured to calculate a transmission speed at which a signal is transmitted to a terminal transmitting the response signal based on the signal intensity, and
the controller (145) is configured to calculate the second period based on a data amount of data to be distributed to a terminal after a communication connection is established and on the calculated transmission speed.

7. The wireless communication apparatus (10) according to Claim 1, further comprising a transmission speed measurement unit (18) configured to measure a transmission speed of a signal in space,
wherein the controller (145) is configured to calculate the second period based on a data amount of information to be distributed to a terminal after a communication connection is established and on a transmission speed for the information.

8. The wireless communication apparatus (30) according to Claim 1, wherein the controller (192) is configured to transmit the beacon at a first period before the start signal is output and to stop transmitting the beacon when the start signal is output.

9. The wireless communication apparatus (30) according to Claim 8, further comprising:
a moving speed calculator (110) configured to measure a signal intensity of a response signal transmitted by a terminal and to calculate a moving speed of the terminal based on a change in the signal intensity;
a transit time calculator (111) configured to calculate a transit time period needed for the terminal to pass through an area in which data is distributed based on the calculated moving speed;
a transmission time calculator (112) configured to calculate a remaining time period needed to complete the distribution of the data based on a data amount of the data to be distributed to the terminal and on a transmission speed for the data, and
the controller (192) is configured to compare the transit time period with the remaining time period and to transmit the beacon at the first period after the remaining time period when the transit time period is longer than the remaining time period, while transmitting the beacon at the first period after the transit time period when the remaining time period is longer than the transit time period.

10. The wireless communication apparatus (30) according to Claim 9, further comprising an interface (113) to which a recording medium is connectible, the recording medium including information used to update the transmission speed recorded in the transmission time calculator (112).

11. The wireless communication apparatus (30) according to Claim 9, further comprising a transmission speed measurement unit (114) configured to measure an average transmission speed of a signal in space and to output the measured average transmission speed to the transmission time calculator (112) as the transmission speed recorded in the transmission time calculator (112).

12. A connection control method for use in a wireless communication apparatus comprising a wireless unit configured to transmit a beacon via a wireless communication and a Media Access Control (MAC) processor configured to control a period at which the beacon is transmitted, the method comprising:
transmitting the beacon at a first period;
generating a start signal upon receiving a response signal to the beacon; and
switching the period for transmission of the beacon from the first period to a second period when the start signal is generated or stopping the transmission of the beacon when the start signal is generated, the second period being longer than the first period.

13. A recording medium with a connection control program recorded therein, the program being used in a computer provided in a wireless communication apparatus comprising a wireless unit configured to transmit a beacon via a wireless communication and a Media Access Control (MAC) processor configured to control a period at which the beacon is transmitted, the program allowing the computer to carry out:
a process of transmitting the beacon at a first period;
a process of generating a start signal upon receiving a response signal to the beacon; and
a process of switching the period for transmission of the beacon from the first period to a second period when the start signal is generated or stopping the transmission of the beacon when the start signal is generated, the second period being longer than the first period.
